Europäisches Patentamt

European Patent Office

Office européen des brevets

(19)

(11) Numéro de publication: **0 256 898**
**B1**

(12) **FASCICULE DE BREVET EUROPEEN**

(45) Date de publication du fascicule du brevet:
06.12.89

(21) Numéro de dépôt: **87401560.5**

(22) Date de dépôt: **03.07.87**

(51) Int. Cl.⁴: **B65G 65/36, A01F 25/16**

(54) **Dispositif de vidange des silos.**

(30) Priorité: **04.07.86 FR 8609714**

(43) Date de publication de la demande:
**24.02.88 Bulletin 88/8**

(45) Mention de la délivrance du brevet:
**06.12.89 Bulletin 89/49**

(84) Etats contractants désignés:
**BE CH DE ES GB IT LI NL SE**

(56) Documents cités:
**DE-A- 3 020 214**
**FR-A- 1 081 986**
**FR-A- 1 087 925**
**FR-A- 1 423 820**
**US-A- 4 373 623**

(73) Titulaire: **Drouet, Jean-François Adrien Louis, 2, rue des Lacs d'Amour Montbazon, F- 37250 Veigne(FR)**

(72) Inventeur: **Drouet, Jean-François Adrien Louis, 2, rue des Lacs d'Amour Montbazon, F- 37250 Veigne(FR)**

(74) Mandataire: **Vander-Heym, Serge, CABINET R. VANDER-HEYM 172, Boulevard Voltaire, F-75011 Paris(FR)**

## Description

La présente invention est relative à un dispositif de vidange des silos du genre de ceux permettant la vidange laminaire en évitant les surpressions dues à l'ébranlement de la masse ensilée.

Un tel dispositif est décrit,notamment, dans l'ouvrage "Silos" de Messieurs M.& A. REIMBERT, publié en 1956 chez Eyrolles.

Il se compose essentiellement d'un conduit vertical d'évacuation situé au centre du silo,percé de trous sur toute sa hauteur et dont l'extrémité inférieure aboutit à l'orifice de vidange du silo. Le maintien de ce conduit est assuré par des bras le reliant aux parois du silo mais ces bras constituent des zones de rétention de la matière ensilée avec tous les inconvénients que cela présente.

Pour limiter,notamment, les inconvénients ci-dessus, on a disposé le conduit d'évacuation à proximité de l'une des parois du silo, mais se faisant on a laissé subsisté un inconvénient important qui est le coût élevé de l'installation.

En effet, le conduit d'évacuation est délimité par un tube métallique très difficile à manier, à fixer à proximité d'une paroi et sur lequel la réalisation des ouvertures est malaisée à effectuer.

Par le document FR-A 1 423 820, on connaît un dispositif de vidange des silos, tel que décrit dans le préambule de la revendication 1. La présente invention s'en distingue par les caractéristiques contenues dans la deuxième partie de la revendication 1.

L'invention sera mieux comprise par la description qui va suivre, faite en se référant au dessin annexé à titre d'exemple indicatif seulement, sur lequel:

La figure 1 est une vue partielle, en perspective,montrant un premier mode de réalisation du dispositif de l'invention ;

La figure 2 est une vue selon la flèche F de la figure 1;

La figure 3 est une vue en coupe effectuée selon la ligne III-III de la figure 2;

La figure 4 est une vue analogue à la figure 1 montrant un second mode de réalisation;

La figure 5 est une vue analogue à celle 3 mais relative au second mode de réalisation.

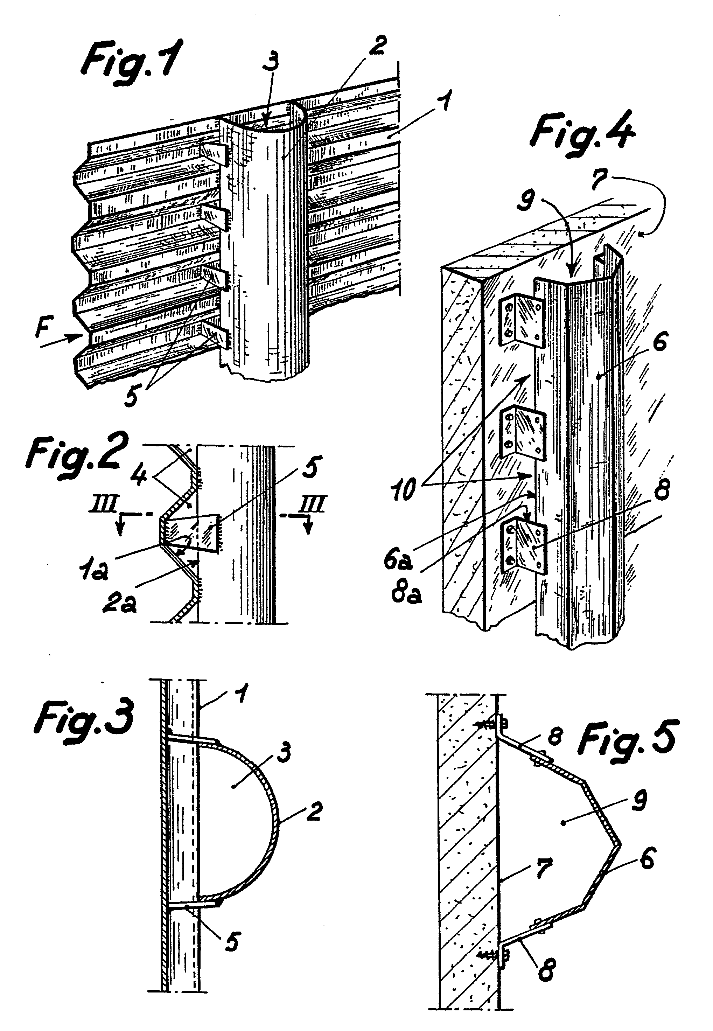

En se reportant à la figure 1, on voit que le dispositif est appliqué à un silo dont les parois 1 sont réalisées à l'aide de tôles ondulées dont les ondulations sont disposées sensiblement horizontalement.

Selon l'invention, on fixe contre la paroi 1 une gouttière 2, disposée verticalement et dont la paroi interne ménage avec la portion de la paroi du silo disposée en regard, un conduit 3.

Comme cela ressort tout particuliérement de la figure 2, les ouvertures 4 permettant au produit ensilé de pénétrer dans le conduit 3 sont formées naturellement par les bords 2a de la gouttière et les creux internes la des ondulations de la paroi 1.

Comme une partie de la paroi usuelle du silo est utilisée pour former le conduit 3, il est évident qu'on réalise ainsi une économie de matière appréciable.

A cela s'ajoute le fait que la gouttière 2 est un organe très simple à réaliser et qui ne pose ni de problème de stockage ni de transport.

Il faut signaler aussi qu'une économie substantielle est réalisée au niveau de l'usinage puisqu'il n'est plus nécessaire de découper des ouvertures dans la paroi du conduit.

Des pattes 5, reliant la paroi du silo à la gouttière, permettent d'ajuster la section des ouvertures 4 tout en contribuant à une meilleure fixation de la gouttière.

La figure 4 montre un second mode de réalisation du dispositif appliqué à un silo à parois lisses tel que ceux réalisés en béton.

Dans ce cas, la gouttière 6, analogue à celle 2, est maintenue à proximité de la face interne 7 du silo par l'entremise de pattes 8 de façon à délimiter un conduit 9 d'évacuation.

La matière ensilée pénètre dans le conduit 9 par des ouvertures 10 délimitées par les champs 8a des pattes 8, la face 7 et les bords 6a de la gouttière.

## Revendications

1. Dispositif de vidange des silos comportant un conduit vertical formé par l'association d'une partie de la face interne de le paroi du silo et par une gouttière (2) ménageant des ouvertures (4, 10) par lesquelles le produit pénètre dans ledit conduit, la gouttière étant disposée verticalement et fixée contre ladite paroi, caractérisé en ce que la gouttière (2) n'est pas perforée, et en ce que les ouvertures (4, 10) sont ménagées entre les bords (2a, 6a) de ladite gouttière et la face interne de la paroi du silo.

2. Dispositif de vidange des silos, selon la revendication 1, appliqué à des silos dont la paroi (1) est constituée par des tôles ondulées dont les ondulations s'étendent sensiblement horizontalement, caractérisé en ce que les ouvertures (4) permettant au produit ensilé de pénétrer dans le conduit (3) sont formées par les bords de la gouttière et la face interne des creux des ondulations de la paroi.

3. Dispositif de vidange des silos,selon la revendication 2, caracatérisé en ce que des pattes (5) reliant le fond de la face interne des creux des ondulations et la gouttière, permettent d'ajuster la section des ouvertures (4).

4. Dispositif de vidange des silos,selon la revendication 1, du genre de ceux appliqués à des silos à parois lisses, caractérisé en ce que la gouttière verticale (6) est maintenue à proximité de la face interne du silo par l'entremise de pattes (8).

## Patentansprüche

1. Vorrichtung zum Entleeren von Silos mit einer senkrechten Ableitung, gebildet durch die Verbindung eines Teils der Innenfläche der Silowand (1) mit einer Rinne (2) mit Öffnungen (4, 10) durch welche das Produkt in die besagte Ableitung gelangt, wobei die Rinne senkrecht ausgerichtet und an der Silowand befestigt ist, dadurch gekennzeichnet, daß die Rinne (2) nicht durchbohrt ist und die Öffnungen (4, 10) zwischen den Rändern (2a, 6a) der Rinne und der Innenfläche der Silowand angebracht sind.

2. Vorrichtung zum Entleeren von Silos nach Patentanspruch 1, an Silos angebracht, deren Wände (1) aus Wellblechprofilen mit waagrecht verlaufender Wellung bestehen, dadurch gekennzeichnet, daß die Öffnungen (4), durch die das Siloprodukt in die Ableitung (3) gelangt, von den Rändern der iinne und die Innenfläche der Höhlungen der Wellblechwand gebildet werden.

3. Vorrichtung zum Entleeren von Silos nach Patentanspruch 2, dadurch gekennzeichnet, daß die Klauen (5), mit denen der Boden der Innenfläche der Wellblechhöhlungen mit der Rinne verbunden ist, eine Einstellung der Weite der Öffnungen (4) ermöglichen.

4. Vorrichtung zum Entleeren von Silos nach Patentanspruch 1 vom Typ der an glatte Silowände angebrachten Ableitungen, dadurch gekennzeichnet, daß die senkrecht angebrachte Rinne (6) durch den Einbau von Zwischenklauen (8) in der Nähe der Innenfläche der Silowand gehalten wird.

**Claims**

1. Device for emptying silos comprising a vertical duct formed by the association of a portin of the internal face of a the wall (1) of the silo and by a gutter (2) forming openings (4, 10) through which the product penetrates into said duct, the gutter being disposed vertically and fixed against said wall, characterized in that the gutter (2) is not perforated, and in that the openings (4, 10) are formed in the edges (2a, 6a) of said gutter and the internal face of the wall of the silo.

2. Device for emptying silos according to claim 1, applied to silos whose wall (1) is formed by corrugated metal sheets whose corrugations extend substantially horizontally, characterized in that the openings (4) permitting the ensilaged product to penetrate into the duct (3) are formed by the edge of the gutter and the internal face of the hollow portions of the hollow portions of the corrugations of the wall.

3. Device for emptying silos according to claim 2, charcterized in that lugs (5) connecting the bottom of the internal face of the hollow portions of the corrugations and the gutter together make it possible to adjust the section of the openings (4).

4. Device for emptying silos according to claim 1, of the kind applied to silos with smooth walls, characterized in that the vertical gutter (6) is held close to the internal face of the silo by means of lugs (8).

Fig.1

Fig.2

Fig.3

Fig.4

Fig.5